# EUROPÄISCHE PATENTSCHRIFT

(11) **EP 2 248 238 B1**
(45) Veröffentlichungstag und Bekanntmachung des Hinweises auf die Patenterteilung: **22.07.2015**
(21) Anmeldenummer: 08872798.7
(22) Anmeldetag: 30.12.2008
(51) Int. Cl.: H02H 3/14, B60L 3/00, B60L 3/04

(54) **ENTLADESCHALTUNG FÜR HOCHSPANNUNGSNETZE**
DISCHARGE CIRCUIT FOR HIGH VOLTAGE NETWORKS
CIRCUIT DE DECHARGE POUR RESEAUX DE TENSION ELEVEE

(30) Priorität: 25.02.2008 DE 102008010978
(43) Veröffentlichungstag der Anmeldung: 10.11.2010
(73) Patentinhaber: Robert Bosch GmbH, 70442 Stuttgart (DE)
(72) Erfinder: KUEHNER, Jochen, 71522 Backnang (DE)
(86) Internationale Anmeldenummer: PCT/EP2008/068340
(87) Internationale Veröffentlichungsnummer: WO 2009/106188

(56) Entgegenhaltungen:
- EP-A- 0 488 240

## Beschreibung

### Stand der Technik

Die Erfindung betrifft eine Vorrichtung zum Entladen eines elektrischen Netzes oder eines elektrischen Bauelements gemäß dem Oberbegriff des Patentanspruchs 1.

Bei Hybridfahrzeugen oder Fahrzeugen mit Elektroantrieb werden i. d. R. Spannungen eingesetzt, die mehrere 100 Volt betragen können. Spannungen, die größer sind als 60 V werden dabei als "Hochspannung" bezeichnet. Aus Gründen der Personensicherheit müssen Hochspannungs-Bordnetze abschaltbar sein und entladen werden können. Zu diesem Zweck umfassen bekannte Hochspannungs-Bordnetze eine aktive oder passive Entladevorrichtung. Eine bekannte passive Entladevorrichtung besteht aus einem Widerstand, der parallel zum einem Energiespeicher, wie z. B. einem Kondensator geschaltet ist. Im Betrieb wird der Kondenstor ständig über den Widerstand entladen. Der Widerstand verursacht dabei eine dauerhafte Verlustleistung, die 10W und mehr betragen kann. Darüber hinaus muss der Entladewiderstand wegen der hohen dauerhaften Verlustleistung üblicherweise auf einem Kühlkörper montiert werden.

Eine bekannte aktive Entladevorrichtung umfasst i. d. R. einen schaltbaren Widerstand, der mittels eines Schalters ein- und ausschaltbar ist. Der Widerstand ist im Normalbetrieb ausgeschaltet und wird auf Anforderung mittels eines Steuergeräts automatisch eingeschaltet. Der Widerstand muss damit nur auf die zu entladende Energie und nicht auf die Dauerverlustleistung ausgelegt sein. Wenn das Steuergerät ausfällt, kann es vorkommen, dass der Schalter nicht rechtzeitig oder gar nicht betätigt wird. Das elektrische Bordnetz wird in diesem Fall nicht entladen, so dass das Risiko eines elektrischen Schlags besteht. Ein weiteres Risiko besteht darin, dass der Hauptschalter zum versorgenden Netz bzw. zur Batterie fälschlicherweise nicht öffnet und der Entladewiderstand damit zerstört werden kann

### Offenbarung der Erfindung

Es ist daher die Aufgabe der vorliegenden Erfindung, eine Entladeschaltung für ein elektrisches Hochspannungsnetz zu schaffen, die mit größerer Zuverlässigkeit arbeitet, weniger Verlustwärme erzeugt und darüber hinaus eigengesichert ist.

Gelöst wird diese Aufgabe gemäß der Erfindung durch die im Patentanspruch 1 angegebenen Merkmale. Weitere Ausgestaltungen der Erfindung ergeben sich aus den Unteransprüchen.

Ein wesentlicher Aspekt der Erfindung besteht darin, eine Entladeschaltung mit einem PTC-Widerstand zu realisieren, und den PTC-Widerstand mittels eines Schalters zu aktivieren bzw. zu deaktivieren, dessen Steueranschluss (direkt oder indirekt) aus der Netzspannung gespeist wird. Schalter und PTC-Widerstand sind dabei thermisch gekoppelt und wirken als geregelte Stromsenke. Sobald der Schalter eingeschaltet hat, wird der PTC-Widerstand vom Transistor erwärmt und erhöht seinen Widerstand. Dadurch verändert sich die Steuerspannung des Transistors, so dass sich der Entladestrom durch den Transistor und PTC-Widerstand verringert. Durch die Versorgung des Schalters aus dem zu entladenden Netz ist die Funktion der Entladeschaltung, unabhängig von einem Steuergerät, in jedem Fall sichergestellt.

Der schaltbare Widerstand ist vorzugsweise parallel zu einem zu entladendem Bauelement, wie z.B. einem Kondensator angeschlossen. Gemäß einer bevorzugten Ausführungsform der Erfindung ist für jedes kapazitive Bauelement eine separate Entladeschaltung, d.h. ein eigener PTC-Widerstand, vorgesehen. Der PTC-Widerstand muss in diesem Fall nur die im kapazitiven Element gespeicherte Energie in Wärme umwandeln. Alternativ können mit einer Entladeschaltung auch mehrere Kondensatoren bzw. kapazitive Bauelemente entladen werden. Gleichzeitig ist die Schaltung eigensicher, wenn z.B. der Hauptschalter zum Versorgungsnetz/Batterie nicht geöffnet wurde.

Der Schalter umfasst vorzugsweise einen Transistor, wie z. B. einen MOS-Transistor.

Am Steueranschluss (z.B. Gate) des Schalters ist vorzugsweise ein zweiter Schalter angeschlossen, mittels dessen der erste Schalter aktiviert bzw. deaktiviert werden kann. Der zweite Schalter ist vorzugsweise zwischen dem Steueranschluss des ersten Schalters und einem Referenzpotential (z. B. Masse) angeschlossen. Der Steueranschluss des ersten Schalters kann somit wahlweise gegen das Referenzpotential oder die Netzspannung bzw. eine daraus abgeleitete Spannung geschaltet werden.

Der Steueranschluss des ersten Schalters ist vorzugsweise über einen Widerstand mit dem Netzpotential verbunden. Dieser Widerstand hat vorzugsweise einen ohmschen Widerstand von mehreren 100 kOhm.

Gemäß einer speziellen Ausführungsform der Erfindung ist eine Zenerdiode am Steueranschluss des ersten Schalters angeschlossen. Die Zenerdiode ist vorzugsweise parallel zum zweiten Schalter angeordnet und dient dazu, eine konstante Spannung für die Stromregelung zu liefern.

Die erfindungsgemäße Entladeschaltung umfasst vorzugsweise auch eine Steuereinheit, wie z.B. ein Steuergerät, das mit einem Steueranschluss des zweiten Schalters verbunden ist und diesen ansteuert. Im Normalbetrieb ist der zweite Schalter vorzugsweise durchgeschaltet (leitend). Der erste Schalter ist somit hochohmig und es fließt kein Strom über den PTC-Widerstand. Im Falle einer Entlade-Anforderung wird der zweite Schalter geöffnet und somit der erste Schalter geschlossen. Das Netz bzw. Bauelement wird somit über den PTC-Widerstand entladen.

Der Entladevorgang wird vorzugsweise nach einer Aktion "Fahrzeugzündung AUS", nach einer Kollision des Fahrzeugs oder vor dem Durchführen von Wartungsarbeiten durchgeführt.

Die vorstehend beschriebene Entladeschaltung kommt insbesondere in Hybridfahrzeugen zum Einsatz, ist aber auch in Elektrofahrzeugen oder Brennstoffzellenfahrzeugen anwendbar.

### Kurze Beschreibung der Zeichnungen

Die Erfindung wird nachstehend anhand der beigefügten Zeichnungen beispielhaft näher erläutert. Es zeigen:

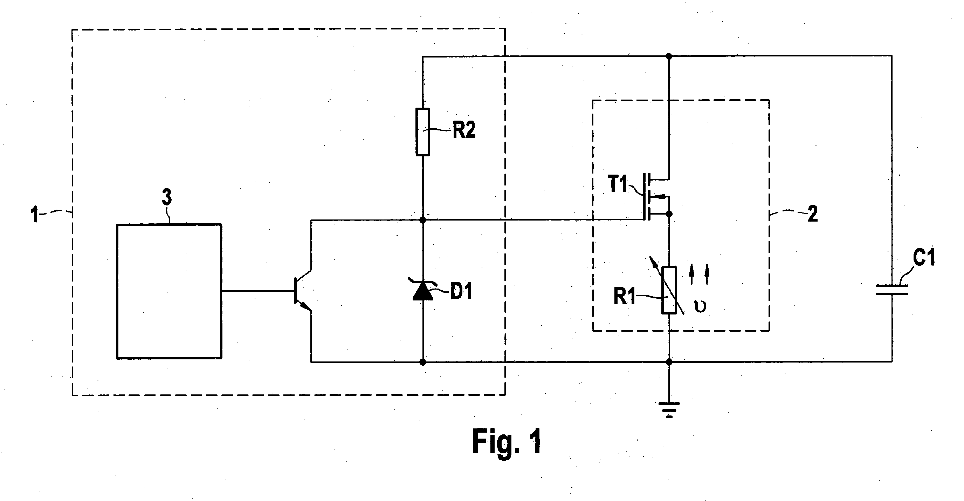

- Fig. 1: eine schematische Darstellung einer Entladeschaltung für ein Hochspannungsnetz.

### Ausführungsformen der Erfindung

Fig. 1 zeigt eine vereinfachte Darstellung einer Entladeschaltung für ein Hochspannungs-Bordnetz eines Hybridfahrzeugs. Die Spannung des Hochspannungsnetzes kann beispielsweise 400 Volt betragen. Die Entladeschaltung dient hier zum Entladen eines Kondensators C1, kann aber auch für andere kapazitive Bauelemente verwendet werden. Derartige Kondensatoren C1 werden üblicherweise als Pufferkondensator eingesetzt, um die Betriebsspannung der elektrischen Verbraucher zu stabilisieren.

In bestimmten Situationen, wie z. B. nach einem Unfall oder vor einer Wartung des Fahrzeugs, muss die im Pufferkondensator C1 gespeicherte Ladung schnell abgebaut werden. Zu diesem Zweck ist ein schaltbarer Widerstand 2 vorgesehen, der parallel zum Kondensator C1 geschaltet ist. Der Versorgungsanschluss ist dabei mit der Netzspannung V und der zweite Anschluss mit Masse verbunden.

Der schaltbare Widerstand 2 umfasst einen MOS-Transistor T1 und einen PTC-Widerstand R1 (PTC: Positive Temperature Coefficient). Die beiden Bauelemente sind in Reihe geschaltet, wobei der PTC-Widerstand R1 masseseitig angeordnet ist. Transistor T1 und PTC-Widerstand R1 sind thermisch gekoppelt und vorzugsweise auf einer Leiterplatte angeordnet. Der Steueranschluss G ist über einen Widerstand R2 mit der Versorgungsspannung V verbunden.

Der Transistor T1 ist im Normalbetrieb geöffnet und wird auf Anforderung eingeschaltet. Der Kondensator C1 entlädt sich dann über den Transistor T1 und den PTC-Widerstand R1. Der Stromfluss wird dabei durch den PTC-Widerstand R1 auf einen Maximalwert begrenzt. Schalter und PTC-Widerstand wirken dabei als geregelte Stromsenke. Sobald der Transistor T1 eingeschaltet hat, wird der PTC-Widerstand R1 vom Transistor T1 erwärmt und erhöht seinen Widerstand.

Dadurch verändert sich die Steuerspannung des Transistors, so dass sich der Entladestrom durch den Transistor und PTC-Widerstand verringert.

Zum Ansteuern des Transistors T1 ist eine Steuerschaltung 1 vorgesehen, die mit dem Steueranschluss G des Transistors T1 verbunden ist. Die Steuerschaltung 1 umfasst einen zweiten Schalter T2, der hier als Bipolar-Transistor realisiert ist. Der Bipolar-Transistor T2 ist zwischen den Steueranschluss G und Masse geschaltet und wird von einer Steuereinheit 3 angesteuert.

Im Normalbetrieb ist der Transistor T2 leitend und zieht somit den Steueranschluss G gegen Masse. Auf Anforderung oder bei einem Spannungseinbruch wird der zweite Transistor T2 hochohmig. Der erste Transistor T1 wird somit eingeschaltet. Der erste Transistor T1 vorsorgt sich dann selbst aus dem elektrischen Netz. Der Kondensator C1 wird somit über den Transistor T1 und den PTC-Widerstand R1 entladen.

Am Steueranschluss G des Transistors T1 ist ferner eine Zenerdiode D1 angeschlossen, die den Transistor T1 vor Überspannungen schützt und eine Konstantspannung zur Verfügung stellt.

Im Falle mehrer kapazitiver Bauelemente (C1) kann jedem Bauelement eine eigene Entladeschaltung zugeordnet sein.

## Patentansprüche

1. Vorrichtung zum Entladen eines elektrischen Netzes oder eines elektrischen Bauelements (C1), umfassend einen schaltbaren Widerstand (2), **dadurch gekennzeichnet, dass** der schaltbare Widerstand (2) einen PTC-Widerstand (R1) und einen Schalter (T1) umfasst, die thermisch gekoppelt sind, und dass der Steueranschluss (G) des Schalters (T1) mit der Netzspannung (V) verbunden ist.

2. Vorrichtung nach Anspruch 1, **dadurch gekennzeichnet, dass** der schaltbare Widerstand (2) parallel zu einem zu entladenden Bauelement (C1) angeschlossen ist.

3. Vorrichtung nach einem der Ansprüche 1 oder 2, **dadurch gekennzeichnet, dass** am Steueranschluss (G) des Schalters (T1) ein zweiter Schalter (T2) angeschlossen ist, mittels dessen der Steueranschluss (G) wahlweise gegen eine Netzspannung (V) oder eine Referenzspannung geschaltet werden kann.

4. Vorrichtung nach einem der vorhergehenden Ansprüche, **dadurch gekennzeichnet, dass** der Steueranschluss (G) des Schalters (T1) über einen Widerstand (R2) mit der Netzspannung (V) verbunden ist.

5. Vorrichtung nach einem der vorhergehenden Ansprüche, **dadurch gekennzeichnet, dass** am Steueranschluss (G) des Schalters (T1) eine Zenerdiode (D1) angeschlossen ist.

6. Vorrichtung nach Anspruch 3, **dadurch gekennzeichnet, dass** eine Steuereinheit (3) vorgesehen ist, die den zweiten Schalter (T2) ansteuert.

## Claims

1. Device for discharging an electrical network or an electrical component (C1), comprising a switchable resistance (2), **characterized in that** the switchable resistance (2) comprises a PTC resistor (R1) and a switch (T1) which are thermally coupled, and **in that** the control connection (G) of the switch (T1) is connected to the network voltage (V).

2. Device according to Claim 1, **characterized in that** the switchable resistance (2) is connected in parallel with a component (C1) which is to be discharged.

3. Device according to either of Claims 1 and 2, **characterized in that** a second switch (T2) is connected to the control connection (G) of the switch (T1), by means of which second switch the control connection (G) can optionally be connected to a network voltage (V) or a reference voltage.

4. Device according to any of the preceding claims, **characterized in that** the control connection (G) of the switch (T1) is connected to the network voltage (V) via a resistor (R2).

5. Device according to any of the preceding claims, **characterized in that** a Zener diode (D1) is connected to the control connection (G) of the switch (T1).

6. Device according to Claim 3, **characterized in that** a control unit (3), which controls the second switch (T2), is provided.

## Revendications

1. Dispositif de décharge d'un réseau électrique ou d'un composant électrique (C1), comprenant une résistance commutable (2), **caractérisé en ce que** la résistance commutable (2) comprend une résistance PTC (R1) et un commutateur (T1), lesquels sont accouplés thermiquement et **en ce que** le raccord de commande (G) du commutateur (T1) est connecté à la tension de réseau (V).

2. Dispositif selon la revendication 1, **caractérisé en ce que** la résistance commutable (2) est raccordée en parallèle à un composant (C1) à décharger.

3. Dispositif selon l'une quelconque des revendications 1 ou 2, **caractérisé en ce qu'**un deuxième commutateur (T2) est raccordé au raccord de commande (G) du commutateur (T1), au moyen duquel le raccord de commande (G) peut être commuté de manière sélective vers une tension de réseau (V) ou vers une tension de référence.

4. Dispositif selon l'une quelconque des revendications précédentes, **caractérisé en ce que** le raccord de commande (G) du commutateur (T1) est connecté à la tension de réseau (V) par le biais d'une résistance (R2).

5. Dispositif selon l'une quelconque des revendications précédentes, **caractérisé en ce qu'**une diode Zener (D1) est raccordée au raccord de commande (G) du commutateur (T1).

6. Dispositif selon la revendication 3, **caractérisé en ce qu'**une unité de commande (3) est prévue, laquelle commande le deuxième commutateur (T2).
